# EUROPÄISCHE PATENTANMELDUNG

(11) **EP 1 522 443 A2**
(43) Veröffentlichungstag der Anmeldung: **13.04.2005**
(21) Anmeldenummer: 04022168.1
(22) Anmeldetag: 17.09.2004
(51) Int. Cl.: B60J 7/22

(54) **Windabweiser mit Einklemmschutz**

(30) Priorität: 07.10.2003 DE 10346524
(71) Anmelder: ArvinMeritor GmbH, 63128 Dietzenbach (DE)
(72) Erfinder: Heyn, Detlef, 35274 Kirchhain (DE)
(74) Vertreter: Sties, Jochen, Dipl.-Ing.

(57) **Zusammenfassung**

Ein Windabweisersystem für ein Schiebedachsystem weist einen Windabweiser (10) auf, der zwischen einer abgesenkten und einer ausgefahrenen Stellung verstellbar ist, und ein Greifschutzelement (20), das am Windabweiser (10) angebracht ist und sich ausgehend von diesem nach unten erstreckt.

## Beschreibung

Die Erfindung betrifft ein Windabweisersystem für ein Schiebedachsystem sowie ein Schiebedachsystem mit einem solchen Windabweisersystem.

Das Windabweisersystem hat die Funktion, die Strömungsverhältnisse dann zu verbessern, wenn sich ein verstellbarer Deckel des Schiebedachsystems in einer zumindest teilweise geöffneten Stellung befindet. Es enthält einen Windabweiser, der üblicherweise an dem in Fahrtrichtung gesehen vorderen Rand einer vom Deckel freigebbaren Dachöffnung angeordnet und verstellbar ist, nämlich zwischen einer abgesenkten Stellung, in der er sich unterhalb der Außenfläche des Fahrzeugdaches befindet, und einer ausgefahrenen Stellung, in der er über die Außenfläche des Fahrzeugdaches hervorsteht. Je nach Ansteuerung des Windabweisers sind auch verschiedene Zwischenstellungen möglich.

Wenn sich der Windabweiser in seiner ausgefahrenen Stellung befindet, existiert unter ihm üblicherweise ein Freiraum. In diesen kann ein Fahrzeuginsasse hineingreifen. Falls dann der Windabweiser in die abgesenkte Stellung überführt wird, beispielsweise weil der Deckel des Schiebedachs geschlossen wird, besteht die Gefahr, daß die Hand des Fahrzeuginsassen vom sich absenkenden Windabweiser eingeklemmt wird.

Die Aufgabe der Erfindung besteht darin, ein Windabweisersystem zu schaffen, bei dem die Gefahr beseitigt ist, daß sich ein Fahrzeuginsasse im Betrieb einklemmt.

Zu diesem Zweck ist erfindungsgemäß ein Windabweisersystem für ein Schiebedachsystem vorgesehen, mit einem Windabweiser, der zwischen einer abgesenkten und einer ausgefahrenen Stellung verstellbar ist, und einem Greifschutzelement, das am Windabweiser angebracht ist und sich ausgehend von diesem nach unten erstreckt. Die Erfindung beruht auf dem Gedanken, am Windabweiser ein zusätzliches Bauteil anzubringen, nämlich das Greifschutzelement, welches wenigstens dann, wenn der Windabweiser von seiner ausgefahrenen Stellung in seine abgesenkte Stellung überführt wird, den Raum unterhalb des Windabweisers unzugänglich macht, also den Raum, in den der Windabweiser hinein abgesenkt wird.

Erfindungsgemäß ist auch ein Schiebedachsystem mit einem solchen Windabweisersystem vorgesehen, wobei sich das Greifschutzelement, wenn sich der Windabweiser in der ausgefahrenen Stellung befindet, zwischen dem Windabweiser und einem Rahmen des Schiebedachsystems erstreckt, so daß ein Fahrzeuginsasse nicht unter den ausgefahrenen Windabweiser greifen kann.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 schematisch ein Fahrzeugdach mit einem Schiebedachsystem;
- Figur 2 in einer perspektivischen Ansicht ein Schiebedachsystem nach dem Stand der Technik;
- Figur 3 schematisch einen Schnitt entlang der Ebene III-III von Figur 1 durch ein erfindungsgemäßes Windabweisersystem; und
- die Figuren 4 bis 6 weitere Ausführungsformen des erfindungsgemäßen Windabweisersystems.

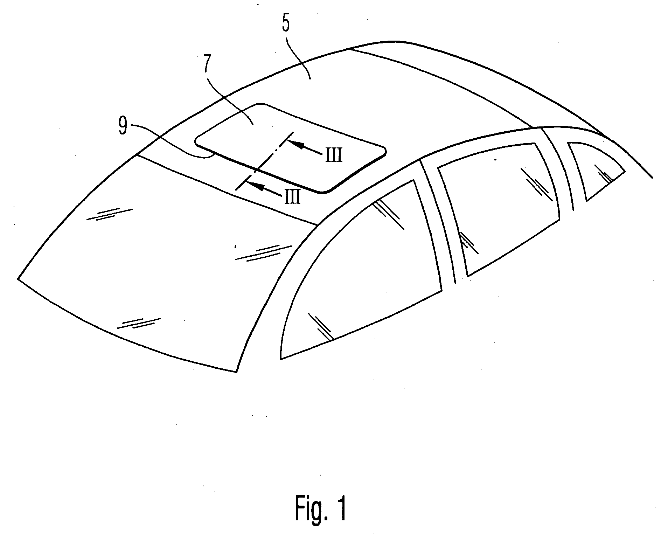

In Figur 1 ist ein Fahrzeugdach 5 gezeigt, das mit einem Schiebedachsystem versehen ist. Das Schiebedachsystem weist einen Deckel 7 auf, der relativ zu einem Rahmen 8 des Schiebedachsystems in der Längsrichtung des Fahrzeugs verschoben werden kann, und zwar zwischen einer in Figur 1 gezeigten Stellung, in welcher er eine Dachöffnung 9 im Fahrzeugdach 5 verschließt, und einer in Fahrtrichtung gesehen nach hinten zurückgeschobenen Stellung, in welcher er die Dachöffnung teilweise oder vollständig freigibt. Am in Fahrtrichtung gesehen vorderen Ende des Rahmens 8 und auch der Dachöffnung 9 ist ein Windabweisersystem angebracht, das als wesentliches Bauteil einen Windabweiser 10 aufweist. Dieser ist hier als U-förmiges, starres Bauteil ausgeführt, das an den Enden seiner beiden Schenkel 12 mittels jeweils einer Lagerstelle 14 schwenkbar am Rahmen 8 gelagert ist. Das Windabweisersystem weist eine Ausstellfeder 16 auf, welche den Windabweiser 10 in eine ausgefahrene Stellung beaufschlagt, in der er mindestens mit seinem sich zwischen den beiden Schenkeln 12 befindenden Mittelabschnitt über die Außenhaut des Fahrzeugdachs 5 hervorsteht. Aus dieser Stellung kann der Windabweiser 10 gegen die Wirkung der Ausstellfeder 16 in eine abgesenkte Stellung überführt werden, in welcher er unterhalb der Außenfläche des Fahrzeugdachs 5 angeordnet ist. Diese Stellung nimmt der Windabweiser 10 insbesondere dann ein, wenn der Deckel 7 sich bereits fast oder schon vollständig in seiner geschlossenen Stellung befindet.

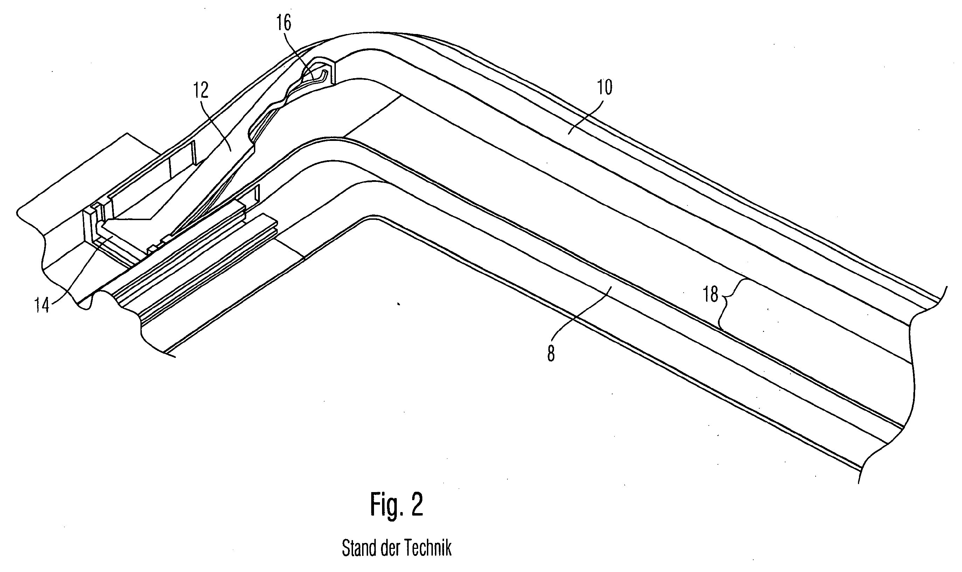

Bei dem bekannten, in Figur 2 gezeigten Windabweisersystem existiert, wenn sich der Windabweiser 10 in seiner ausgefahrenen Stellung befindet, ein Freiraum zwischen einerseits dem Mittelabschnitt des Windabweisers 10 und den seitlichen Schenkeln 12 bis hin zu den Lagerstellen 14, und andererseits dem Rahmen 8, also unterhalb des Windabweisers und oberhalb des Rahmen. Es besteht das Risiko, daß ein Fahrzeuginsasse mit seiner Hand in diesen Freiraum hineingreift, wenn er beispielsweise bei geöffnetem Deckel des Schiebedachsystems seine Hand am Rand der Dachöffnung 9 ablegt, um sich vom Frischluftstrom erfrischen zu lassen. Wenn dann der Deckel geschlossen wird, besteht die Gefahr, daß die Hand des Fahrzeuginsassen eingeklemmt wird, da der Windabweiser 10 aus kinematischen Gründen meist bereits zu einem Zeitpunkt in die abgesenkte Stellung überführt wird, zu dem der Deckel noch ein gutes Stück geöffnet ist und der Fahrzeuginsasse noch nicht die Notwendigkeit sieht, die Hand aus der Dachöffnung zu ziehen. Die Gefahr eines Einklemmens besteht auch bei elektrisch angesteuerten Windabweisern, die in Abhängigkeit von externen Parametern eingefahren werden, ohne daß dies für einen Fahrzeuginsassen vorher erkennbar sein muß.

Um diese Gefahr zu beseitigen, daß die Hand des Fahrzeuginsassen vom Windabweiser eingeklemmt wird, weist das erfindungsgemäße Windabweisersystem ein Greifschutzelement 20 auf. Dieses ist insbesondere am Mittelabschnitt des Windabweisers 10 und in den seitlichen Bereichen sowie am unterhalb davon angeordneten Bereich des Rahmens 8 angebracht und verhindert, wenn sich der Windabweiser 10 in seiner ausgefahrenen Stellung befindet, den Zugang zum Freiraum 18. Der Fahrzeuginsasse kann also mit seiner Hand nicht unter den Windabweiser 10 gelangen. Das Greifschutzelement 20 ist dabei so ausgestaltet, daß es die Verstellung des Windabweisers 10 in die abgesenkte Stellung nicht behindert.

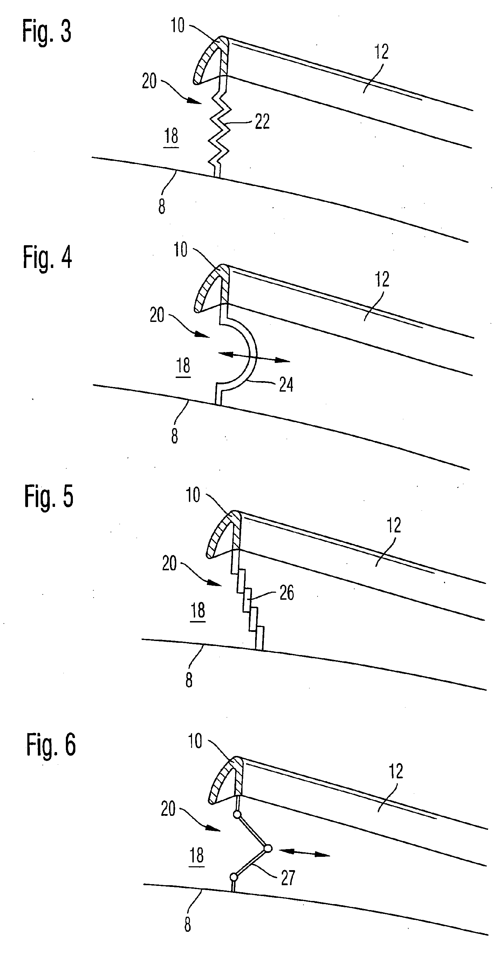

In Figur 3 ist das Greifschutzelement 20 als Faltenbalg 22 ausgeführt, der sich zickzackförmig zusammenlegt, wenn der Windabweiser 10 aus seiner ausgefahrenen in die abgesenkte Stellung überführt wird.

Bei der Ausführungsform von Figur 4 ist das Greifschutzelement 20 als Gummiabdeckung ausgeführt, die durch ihre Formgebung so vorgespannt ist, daß sie sich vom Freiraum 18 weg zusammenzieht bzw. zusammenlegt, wenn der Windabweiser 10 abgesenkt wird. Auf diese Weise wird eine eventuell vorhandene Hand vom Windabweiser weggedrückt.

Bei der Ausführungsform von Figur 5 ist das Greifschutzelement durch eine Reihe von verschiebbar aneinander angebrachten Blenden 26 gebildet, die, abgesehen von der obersten und der untersten Blende, jeweils an einem Ende verschiebbar mit der darüberliegenden und am anderen Ende verschiebbar mit der darunterliegenden Blende verbunden sind. Die Blenden können daher zu einem Paket zusammengeschoben werden, dessen Höhe der Höhe einer einzigen Blende 26 entspricht.

Bei der Ausführungsform von Figur 6 werden ebenfalls Blenden verwendet; diese sind hier mit dem Bezugszeichen 27 bezeichnet und sind gelenkig aneinander angebracht, so daß sie, wenn der Windabweiser 10 abgesenkt wird, sich vom Freiraum 18 weg zusammenfalten. Dadurch wird eine eventuell vorhandene Hand vom Windabweiser weggedrückt.

Allen Ausführungsformen ist gemeinsam, daß durch ein zusätzliches Bauteil, welches keine Windabweiser-Funktion hat und daß mit geringem Aufwand auch nachträglich an bereits existierende Windabweisersysteme angebracht werden kann, ein zuverlässiger Schutz vor einem Einklemmen erzielt werden kann.

### Bezugszeichenliste

- 5:: Fahrzeugdach
- 7:: Deckel
- 8:: Rahmen
- 9:: Dachöffnung
- 10:: Windabweiser
- 12:: Schenkel
- 14:: Lagerstelle
- 16:: Ausstellfeder
- 18:: Freiraum
- 20:: Greifschutzelement
- 22:: Faltenbalg
- 24:: Gummiabdeckung
- 26:: Blende
- 27:: Blende

## Patentansprüche

1. Windabweisersystem für ein Schiebedachsystem, mit einem Windabweiser (10), der zwischen einer abgesenkten und einer ausgefahrenen Stellung verstellbar ist, und einem Greifschutzelement (20), das am Windabweiser (10) angebracht ist und sich ausgehend von diesem nach unten erstreckt.

2. Windabweisersystem nach Anspruch 1, **dadurch gekennzeichnet, daß** das Greifschutzelement (20) ein Faltenbalg (22) ist.

3. Windabweisersystem nach Anspruch 1, **dadurch gekennzeichnet, daß** das Greifschutzelement (20) eine Gummiabdeckung (24) ist.

4. Windabweisersystem nach Anspruch 1, **dadurch gekennzeichnet, daß** das Greifschutzelement (20) aus mehreren Blenden (26; 27) besteht.

5. Windabweisersystem nach Anspruch 4, **dadurch gekennzeichnet, daß** die Blenden (26) relativ zueinander verschiebbar sind.

6. Windabweisersystem nach Anspruch 4, **dadurch gekennzeichnet, daß** die Blenden (27) relativ zueinander klappbar sind.

7. Windabweisersystem nach Anspruch 1, **dadurch gekennzeichnet, daß** das Greifschutzelement ein Netz ist.

8. Windabweisersystem nach einem der vorhergehenden Ansprüche, **dadurch gekennzeichnet, daß** der Windabweiser (10) ein starres, allgemein U-förmiges Bauteil ist und das Greifschutzelement (20) am Mittelabschnitt des Windabweisers angebracht ist.

9. Schiebedachsystem mit einem Windabweisersystem nach einem der vorhergehenden Ansprüche, wobei sich das Greifschutzelement (20), wenn sich der Windabweiser (10) in der ausgefahrenen Stellung befindet, zwischen dem Windabweiser (10) und einem Rahmen (8) des Schiebedachsystems erstreckt, so daß ein Fahrzeuginsasse nicht unter den ausgefahrenen Windabweiser (10) greifen kann.
